# EUROPEAN PATENT APPLICATION

(11) **EP 2 693 030 A1**
(43) Date of publication of application: **05.02.2014**
(21) Application number: 12765225.3
(22) Date of filing: 27.03.2012
(51) Int. Cl.: F02D 41/40, F02D 35/00, F02D 41/02, F02D 45/00

(54) **FUEL INJECTION CONTROL DEVICE**

(30) Priority: 28.03.2011 JP 2011070341
(71) Applicant: KABUSHIKI KAISHA TOYOTA JIDOSHOKKI, Kariya-shi, Aichi 448-8671 (JP); TOYOTA JIDOSHA KABUSHIKI KAISHA, Toyota-shi, Aichi-ken, 471-8571 (JP)
(72) Inventor: YAMAMURA, Yoshiya, Kariya-shi, Aichi 448-8671 (JP); NARITA, Yuji, Kariya-shi, Aichi 448-8671 (JP); ITO, Yoshiyasu, Toyota-shi, Aichi-ken 471-8571 (JP)
(74) Representative: TBK
(86) International application number: PCT/JP2012/057975
(87) International publication number: WO 2012/133435

(57) **Abstract**

A calculation unit 15 measures an elapsed time every time a pickup 9b detects a tooth. When fuel is injected using the latest tooth number detected by the pickup 9b as a reference on the basis of a calculation result of a fuel injection timing, the calculation unit 15 calculates an interval from detection of tooth number 6 by the pickup 9b to the start of fuel injection. At a timing where the elapsed time equals the interval, a drive circuit 10 opens a solenoid valve 4, whereby fuel is injected into a cylinder from an injector 3 on the basis of calculation result stored in a storage unit 16.

## Description

### Technical Field

The present invention relates to a fuel injection control apparatus for a diesel engine.

### Background Art

In recent years, common rail type diesel engines have gained prominence among diesel engines. In a common rail type diesel engine, split injection and so on can be performed easily by having a fuel injection control apparatus control energization time (valve opening time) of a fuel injection valve (injector), and therefore injection can be performed with a high degree of freedom. The fuel injection control apparatus calculates an optimum fuel injection amount in accordance with operating conditions of the diesel engine at that time and a fuel injection timing which is the timing to start fuel injection. Opening and closing of the fuel injection valve are controlled in accordance with an injection signal transmitted from the fuel injection control apparatus. The fuel injection timing calculated by the fuel injection control apparatus is stored in a storage area known as an injection memory.

As described in Patent Document 1, the fuel injection timing is calculated on the basis of crank angle in a diesel engine. The crank angle is detected by detecting teeth provided at equal crank angle intervals on an outer periphery of a disc-shaped pulser that rotates together with a crankshaft. A reference tooth which is a tooth immediately preceding a fuel injection start crank angle calculated as the fuel injection timing, and an injection start interval that specifies an angle difference between the reference tooth and the fuel injection start crank angle as a time on the basis of a rotational speed are stored in the injection memory. The fuel injection control apparatus initializes a timer at a point where the reference tooth stored in the injection memory is detected, and transmits an injection signal to a fuel injection valve at a point where the timer measures the injection start interval.

The rotation time of the tooth in the immediately preceding cylinder into which fuel was injected, which corresponds to the current reference tooth, is used to calculate the injection start interval specifying the angle difference as a time. The tooth rotation time is a time interval from detection of one tooth to detection of a following tooth by a tooth detection apparatus such as a pickup. The pulser is divided into sections at every angular interval obtained by dividing the angle by which the crankshaft rotates upon executing a single cycle of a combustion stroke (720° in a four-cycle engine) by the number of cylinders. Common tooth numbers are sequentially allocated to the teeth disposed in each section. The fuel injection apparatus is provided with rotation time storage areas corresponding to the number of the tooth intervals disposed in each section, and the tooth rotation times detected by the pickup or the like are stored in the corresponding rotation time storage areas. A value stored in the rotation time storage area is updated to the latest rotation time upon detecting the rotation time of a tooth having the same number in the next section. The rotation time of a tooth having the same tooth number as the reference tooth, stored in the rotation time storage area, is used to calculate the injection start interval.

Further, the fuel injection control apparatus typically starts to calculate the fuel injection amount and the fuel injection timing for each cylinder on the basis of a predetermined crank angle. To inject fuel into each cylinder reliably, calculation of the fuel injection amount must be completed before a crank angle at which the fuel injection timing has to be stored in the injection memory, in other words, before a calculation completion limit angle. However, the angle for calculating the fuel injection amount becomes gradually narrower as the number of cylinders in a diesel engine increases such that in a four-cylinder diesel engine, the angle is 180°, whereas in an eight-cylinder diesel engine, the angle is only 90°.

[Patent Document 1] JP 2001-234777 A1

### Summary of the Invention

In a conventional injection control, the reference tooth which is the tooth immediately preceding the fuel injection timing which is determined by calculating the fuel injection timing and an elapsed time following the reference tooth is set in the injection memory, and the timer is initialized upon detecting the reference tooth. Therefore, when calculation of the fuel injection timing is completed before the calculated fuel injection timing but after detection of the tooth serving as the reference tooth, the reference tooth is not detected even if the injection timing is set in the injection memory, and as a result, an injection may be missed. To avoid this missed injection, when calculation of the fuel injection timing is not completed upon detecting the tooth set as the previous reference tooth in the same cylinder, injection is performed at the previous fuel injection timing and with the previous fuel injection amount. In this case, since the fuel injection does not reflect the latest operating conditions, rotational variation and exhaust gas deterioration may occur. This condition is more likely to occur when the number of cylinders in a diesel engine is large such that the calculation completion limit angle is narrow, or when the rotational speed of the diesel engine increases such that the time which can actually be used for the calculation decreases. Furthermore, since the teeth provided on the pulser for detecting the crank angle include a missing tooth portion to be used as a reference of the crank angle, a tooth immediately preceding the missing tooth portion serves as the reference tooth in the section having the missing tooth portion. Hence, in the section having the missing tooth portion, the calculation completion limit angle is advanced, leading to an increase in the likelihood of rotational variation and exhaust gas deterioration.

The present invention has been designed to solve these problems, and an object thereof is to provide a fuel injection control apparatus with which fuel can be injected into respective cylinders on the basis of the calculated fuel injection amounts and fuel injection timings even when calculation of the fuel injection amount and the fuel injection timing is completed before the calculated fuel injection timing but after detection of a tooth immediately preceding the fuel injection timing.

The present invention provides a fuel injection control apparatus for a diesel engine having a plurality of cylinders, which calculates fuel injection amounts and fuel injection timings for respective cylinders on the basis of a crank angle, the fuel injection control apparatus comprising: a pulser that rotates together with a crankshaft of the diesel engine and has a plurality of teeth provided on an outer peripheral edge thereof; a pickup that detects the teeth; and a control apparatus that calculates the fuel injection amounts and the fuel injection timings for the respective cylinders, and injects fuel into the respective cylinders from fuel injecting means provided in the respective cylinders on the basis of the calculated fuel injection amounts and fuel injection timings, wherein the control apparatus calculates the fuel injection amounts and the fuel injection timings for injecting the fuel into the respective cylinders, calculates an injection start reference tooth and an interval following detection of the injection start reference tooth on the basis of the fuel injection timing, measures an elapsed time following detection of a tooth every time the pickup detects the tooth even before the calculation is completed, and injects the fuel on the basis of the result of the calculation at a timing where the elapsed time reaches the interval when the latest tooth detected by the pickup is identical to the injection start reference tooth at a point where the calculation is completed.

Hence, the elapsed time following detection of a tooth is measured every time the pickup detects the tooth preceding the fuel injection timing is calculated, and therefore, even when, according to the calculation result of the fuel injection timing, the tooth finally detected by the pickup is the injection start reference tooth at which injection is to be started, the elapsed time following detection of the injection start reference tooth upon completing the calculation is known. By performing fuel injection on the basis of the calculation result at a timing where the elapsed time equals the interval, a period for completing the calculation of the fuel injection amount and the fuel injection timing is extended to a point immediately preceding fuel injection.

According to the present invention, the elapsed time following detection of a tooth is measured every time the pickup detects the tooth before the injection start reference tooth at which injection is to be started and the interval following the injection start reference tooth are calculated, and therefore, even when the tooth finally detected by the pickup is the injection start reference tooth at a point where the calculation of the injection start reference tooth and the interval following detection of the injection start reference tooth is completed, the elapsed time following detection of the injection start reference tooth upon completing the calculation is known. By performing fuel injection on the basis of the calculation results at the timing where the elapsed time equals the interval, the period required for completing the calculations relating to fuel injection is extended to a point immediately preceding fuel injection, and as a result, fuel can be injected into the respective cylinders on the basis of the calculated fuel injection amounts and fuel injection timings even when the calculation of the fuel injection amounts and the fuel injection timings is completed after the tooth serving as the injection start reference tooth is detected.

### Brief Description of the Drawings

Fig. 1 is a schematic constitutional diagram of a diesel engine including a fuel injection control apparatus according to an embodiment of the present invention;
Fig. 2 is a view illustrating the constitution of an engine rotation sensor provided in the fuel injection control apparatus according to this embodiment;
Fig. 3 is a view illustrating a process for calculating a fuel injection amount in a section having no missing tooth portion;
Fig. 4 is a view illustrating a process for calculating a fuel injection amount in a section having no missing tooth portion;
Fig. 5 is a view illustrating a process for calculating a fuel injection amount in a section having a missing tooth portion; and
Fig. 6 is a view illustrating a process for calculating a fuel injection amount in a section having a missing tooth portion.

### Description of the Preferred Embodiments

An embodiment of the present invention will be described below on the basis of the attached drawings.

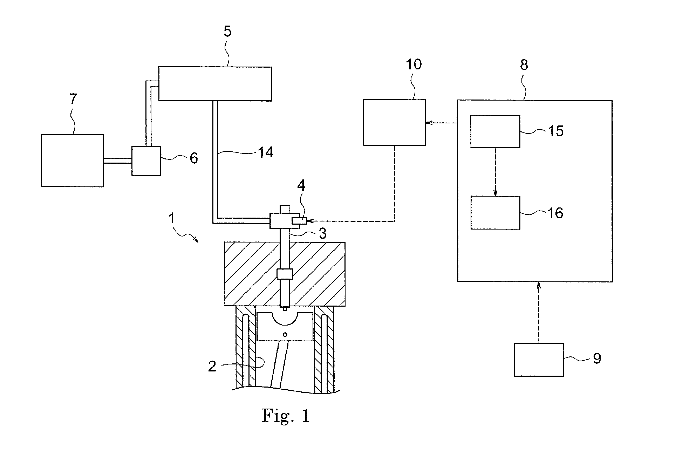

Fig. 1 shows the constitution of a diesel engine including a fuel injection control apparatus according to an embodiment of the present invention. A diesel engine 1 is a V type eight-cylinder common rail diesel engine. Each cylinder 2 (only one cylinder is shown in Fig. 1) is provided with an injector 3 for injecting fuel into the cylinder. Each injector 3 is provided with a solenoid valve 4 for ON/OFF control of the fuel injection.

The injector 3 is connected to a common rail 5 by a high pressure fuel pipe 14. Fuel is accumulated in the common rail 5 in a high pressure state such that when the solenoid valve 4 is opened, the fuel is fed through the fuel pipe 14 by an internal pressure of the common rail 5 and injected from the injector 3. The fuel is supplied to the common rail 5 from a fuel tank 7 by a pump 6 such that the internal pressure of the common rail 5 is maintained at a predetermined pressure.

The diesel engine 1 is further provided with an ECU 8 for controlling operation of the diesel engine 1. The ECU 8 is provided with a calculation unit 15 that calculates fuel injection amounts and fuel injection timings starting fuel injection on the basis of operating conditions of the diesel engine 1 and a storage unit 16 that stores information relating to fuel injection into the respective cylinders 2. An engine rotation sensor 9 for detecting crank angle and rotational speed of the diesel engine 1 and a drive circuit 10 are electrically connected to the ECU 8. The solenoid valve 4 is electrically connected to the drive circuit 10. Here, the ECU 8 and the drive circuit 10 constitute a control apparatus. Further, the calculation unit 15 and the storage unit 16 constitute injection determining means. The injection determining means is a part of the control apparatus that determines whether or not to perform fuel injection on the basis of: an injection start reference tooth serving as an injection start reference that is calculated by the calculation unit 15 and stored in the storage unit 16; an injection start interval which is a time elapsing from detection of the injection start reference tooth to injection; a fuel injection duration serving as a period during which fuel is injected; an elapsed time following detection of the reference tooth; and an elapsed time following the start of fuel injection, and issues commands to the drive circuit 10. The calculation unit 15 also functions as an elapse timer that measures an elapsed time following detection of a tooth 12 by a pickup 9b and an elapse timer that measures an elapsed time from a point at which the injection determining means issues a fuel injection command to the drive circuit 10.

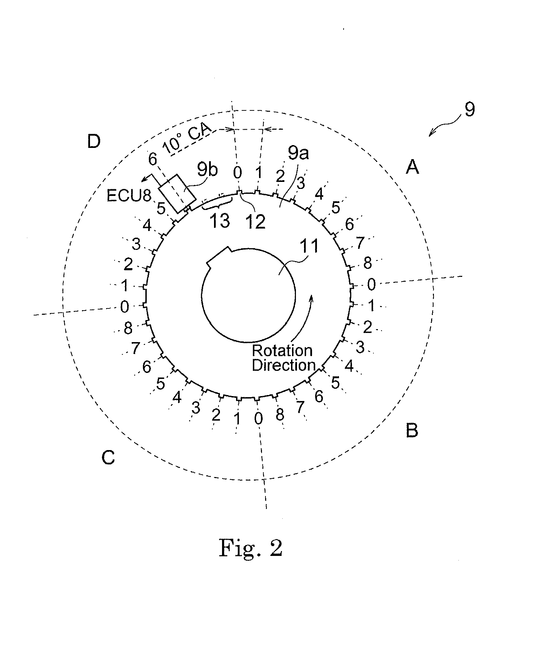

As shown in Fig. 2, the engine rotation sensor 9 includes a pulser 9a and a pickup 9b. The pulser 9a is disc-shaped, and a central portion thereof is coupled to a crankshaft 11 such that the pulser 9a rotates in conjunction with rotation of the crankshaft 11. Thirty-four teeth 12 are formed on an outer peripheral edge of the pulser 9a. The teeth 12 are provided in positions obtained by dividing the entire outer peripheral edge of the pulser 9a by thirty-six, and therefore tooth missing portions 13 exist in two tooth positions indicated by dotted lines. In other words, two teeth are missing. The teeth 12 are divided into four sections A to D at intervals of 90°, and numbers 0 to 8 are allocated respectively to the teeth 12 in the sections A to C. Only seven teeth exist in the section D including the tooth missing portions 13, and therefore numbers 0 to 6 are allocated respectively to the teeth 12 in the section D. The pickup 9b is a magnetic sensor disposed in a position facing the teeth 12 in order to output a pulse signal to the ECU 8 electrically connected thereto every time a tooth 12 approaches during rotation of the pulser 9a. The ECU 8 to which the pulse signals are transmitted calculates the rotational speed on the basis of an interval between the pulse signals. Further, the ECU 8 calculates the crank angle on the basis of the tooth missing portions 13, at which pulse signals are not detected, and the number of pulse signals detected after the tooth missing portions 13. Moreover, in this example, tooth number 5 corresponds to the compression top dead center (TDC) in each cylinder.

Next, operation of the fuel injection control apparatus according to this embodiment will be described.

In this embodiment, the control content executed on the elapse timer in a case where the injection start reference tooth may be a tooth in the section preceding the section including TDC differs from the control content executed on the elapse timer in a case where the injection start reference tooth is tooth number 0 or thereafter in the section including TDC. More specifically, a first region in which the elapsed time following detection of each tooth 12 is measured by the elapse timer every time the pickup 9b detects the tooth 12 is set in the section preceding the section including TDC, and a second region in which the elapsed time following detection of the injection start reference tooth by the pickup 9b is measured by the elapse timer is set in the section including TDC.

The calculation unit 15 calculates the fuel injection amounts to be injected respectively into the eight cylinders 2 of the diesel engine 1 and the injection start crank angle which is the fuel injection timing at a timing based on the crank angle. This timing may be set appropriately in accordance with the processing speed of the ECU 8. When the calculation of the fuel injection amount and the injection start crank angle is completed, the calculation results are stored in the storage unit 16. Next, the calculation unit 15 specifies the injection start reference tooth which is the tooth immediately preceding the injection start crank angle serving as a fuel injection start reference from the calculated injection start crank angle, and calculates the injection start interval which is the period from detection of the injection start reference tooth by the pickup 9b to the start of fuel injection from the injection start crank angle, the crank angle of the injection start reference tooth, and the current engine rotational speed. The calculation unit 15 also calculates a fuel injection duration serving as the period during which fuel is injected with the fuel injection amount and a fuel pressure generated by the common rail 5.

When the calculated injection start reference tooth is a tooth in the section including TDC of the cylinder into which fuel is to be injected, there is time enough for calculating the fuel injection amount and the fuel injection timing even at a high rotational speed. Accordingly, the ECU 8 sets the injection start reference tooth, the injection start interval, and the fuel injection duration in the storage unit 16 so that the solenoid valve 4 is driven at the calculated injection start crank angle. When the pickup 9b detects the injection start reference tooth, the injection determining means resets the elapse timer in order to measure the elapsed time. The injection determining means compares the value of the elapse timer with the injection start interval, and outputs the pulse signal to the drive circuit 10 so as to open the solenoid valve 4 at a timing where the injection start interval elapses.

Further, at a timing where the value of the elapse timer reaches the injection start interval, the injection determining means resets the elapse timer in order to measure the fuel injection time. The injection determining means then compares the value of the elapse timer with the fuel injection duration, and outputs the pulse signal to the drive circuit 10 so as to close the solenoid valve 4 at a timing where the fuel injection duration elapses. Hence, when the calculated injection start reference tooth is a tooth in the section including TDC of the cylinder into which fuel is to be injected, the time of the injection start interval is measured only after the injection start reference tooth is detected. Note that the fuel injection amount does not indicate only the total amount of fuel injected into the respective cylinders. Fuel may be injected into each cylinder by a plurality of injections, such as a main injection and a post-injection, and therefore the fuel injection amount also includes the number of injections and the amount of each injection. Further, the fuel injection timing means that the injection start crank angle and injection end crank angle for each of a plurality of fuel injections into the respective cylinders are calculated.

When the calculated injection start reference tooth is advanced to a tooth in the section preceding the section including TDC of the cylinder into which fuel is to be injected, the time for calculating the fuel injection amount and the fuel injection timing decrease. Accordingly, a tooth at the most advanced injection start crank angle that can be calculated as the fuel injection timing is set in advance as an injection start possible tooth, whereupon the elapse timer is reset in order to start measurement every time the injection start possible tooth or thereafter is detected. When calculation of the fuel injection timing is completed, the ECU 8 sets the calculated injection start reference tooth, injection start interval, and fuel injection duration in the storage unit 16. The injection determining means compares the latest tooth number detected by the pickup 9b with the injection start reference tooth number, and when the latest tooth number is smaller than the injection start reference tooth number, waits until the pickup 9b detects the injection start reference tooth. Then, at a timing where the injection start reference tooth is detected and the value of the elapse timer becomes identical to the injection start interval, the injection determining means outputs the pulse signal to the drive circuit 10 so as to open the solenoid valve 4.

Further, when the latest tooth number is identical to the injection start reference tooth number, the injection determining means only compares the value of the elapse timer with the injection start interval, and outputs the pulse signal to the drive circuit 10 so as to open the solenoid valve 4 at a timing where both values become identical. Note that when the injection start reference tooth, the injection start interval, an injection end reference tooth, and an injection end interval of the previous injection into the same cylinder are stored in the storage unit 16 in advance and the calculation of the fuel injection amount and the fuel injection timing is not completed in the injection start interval of the previous injection start reference tooth, a missed injection is prevented by injecting fuel at the previous fuel injection timing.

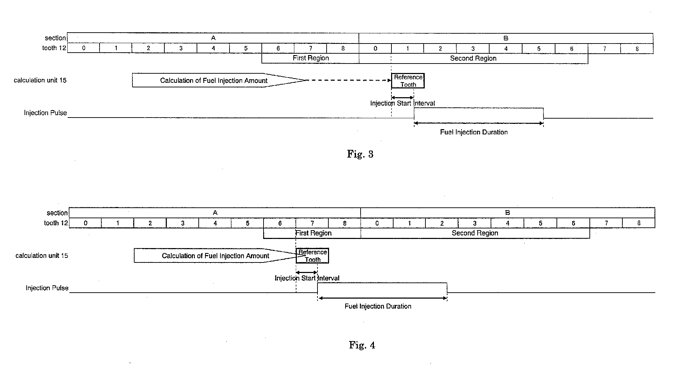

Next, the calculations performed by the calculation unit 15 will be described in detail on the basis of Figs. 3 to 6.

In this example, the fuel injection control executed on a cylinder having TDC in section B will be described. Further, a pilot injection in which the period from the start of calculation of the fuel injection amount and the fuel injection timing to the actual injection is short will be described as an example. Furthermore, calculation of the fuel injection amount and the fuel injection timing is set so as to start from a point at which the pickup 9b detects a tooth number 2 in section A preceding section B including tooth number 5 corresponding to TDC. Moreover, the pilot injection performed in section B is set such that one tooth from tooth number 6 in section A to tooth number 6 in section B including TDC is calculated as the injection start reference tooth. In section B, therefore, the injection start possible tooth is tooth number 6 in section A, the first region is the region extending from tooth number 6 in section A to a point immediately preceding detection of tooth number 0 in section B, and the second region is the region extending from tooth number 0 to a point immediately preceding detection of tooth number 7 in section B.

As shown in Figs. 3 and 4, the calculation unit 15 starts to calculate the fuel injection amount when the pickup 9b (see Fig. 2) detects tooth number 2 in section A preceding section B. When the pickup 9b subsequently detects tooth number 6 which is the injection start possible tooth and thereafter in section A, the injection determining means initializes the elapse timer which is reset every time a tooth is detected in order to measure the elapsed time following detection of the tooth. In this example, it is assumed that calculation of the fuel injection amount and the fuel injection timing is completed after the pickup 9b detects tooth number 7 in section A and before the pickup 9b detects tooth number 8 in section A. Note that the crank angle upon completing calculation of the fuel injection amount and the fuel injection timing increases and decreases in accordance with the performance of the calculation unit 15, the rotational speed, and the calculation load.

For example, a case in which, as a result of the calculations, as shown in Fig. 3, the injection start crank angle which is modified in accordance with the operating conditions is calculated to be between tooth number 1 and tooth number 2 in section B, which is in the second region, will be described. In this case, the elapse timer that is initialized every time a tooth is detected, in the injection determining means, is no longer initialized after tooth number 0 in section B is detected. The calculation unit 15 sets tooth number 1 in section B, which is the tooth immediately preceding the start of fuel injection, as the injection start reference tooth, calculates the injection start interval from the point at which the pickup 9b detects tooth number 1 in section B to the start of fuel injection on the basis of the engine rotational speed at the point of detecting a specific tooth (for example, the specific tooth may be a tooth immediately preceding the injection start reference tooth or a tooth having the same number as the injection start reference tooth in the immediately preceding cylinder), and sets the calculation result in the storage unit 16. Further, the calculation unit 15 calculates the fuel injection duration from the fuel injection amount and the common rail pressure and sets the calculation result in the storage unit 16. When the pickup 9b detects tooth number 1 in section B, the injection determining means resets the elapse timer in order to have the elapse timer measure a time.

Further, at a timing where tooth number 1 in section B, which is the injection start reference tooth, is detected and the value of the elapse timer reaches the injection start interval, the injection determining means outputs the pulse signal to the drive circuit 10 so as to open the solenoid valve 4, whereby fuel is injected from the solenoid valve. Furthermore, the injection determining means resets the elapse timer in order to have the elapse timer measure the fuel injection time at a timing where the value of the elapse timer reaches the injection start interval. The injection determining means then compares the value of the elapse timer with the fuel injection duration and outputs the signal for ending fuel injection at a timing where the value of the elapse timer reaches the fuel injection duration.

Next, a case in which the fuel injection crank angle is advanced such that fuel injection is started before the pickup 9b detects tooth number 0 in section B, which is in the first region, for example, a case in which fuel injection is started after the pickup 9b detects tooth number 7 in section A but before the pickup 9b detects tooth number 8 in section A, will be described. In this case, the injection determining means resets the elapse timer every time the pickup 9b detects a tooth in order to measure the elapsed time anew. The calculation unit 15 sets the tooth immediately preceding the start of fuel injection as the injection start reference tooth after completing calculation of the fuel injection amount and the fuel injection timing. The calculation unit 15 then calculates the injection start interval from the point at which the pickup 9b detects the injection start reference tooth to the start of fuel injection on the basis of the engine rotational speed at the point of detecting a specific tooth (for example, the point of detecting the tooth immediately preceding the injection start reference tooth), and sets the calculation result in the storage unit 16. Next, the injection determining means compares the injection start reference tooth number with the latest tooth number detected by the pickup 9b. When the latest detected tooth number is smaller than the injection start reference tooth number, the injection determining means outputs the pulse signal to the drive circuit 10 to open the solenoid valve 4 at a timing where the pickup 9b detects the injection start reference tooth and the value of the elapse timer becomes identical to the injection start interval.

Further, as shown in Fig. 4, when the latest tooth number detected by the pickup 9b is identical to the injection start reference tooth number (i.e., when both are tooth number 7 in section A), the injection determining means compares the value of the elapse timer with the injection start interval. As shown in Fig. 4, when the value of the elapse timer is smaller than the injection start interval and does not therefore exceed a limit at which the injection determining means can output the pulse signal to the drive circuit 10 to open the solenoid valve 4, the injection determining means determines that fuel injection is possible, and accordingly outputs the pulse signal to the drive circuit 10 to open the solenoid valve 4 at the timing where the value of the elapse timer reaches the injection start interval. In other cases, since calculation of the fuel injection amount and the fuel injection timing is not completed by the injection start crank angle so that fuel injection is determined to be impossible, the injection determining means prevents a missed injection by outputting the pulse signal to the drive circuit 10 to open the solenoid valve 4 in accordance with the previous fuel injection amount and fuel injection timing of the same cylinder. Further, when the previous fuel injection timing of the same cylinder comes before calculation of the fuel injection amount and the fuel injection timing is completed, the injection determining means likewise outputs the pulse signal to the drive circuit 10 to open the solenoid valve 4 in accordance with the previous fuel injection amount and fuel injection timing of the same cylinder to prevent a missed injection.

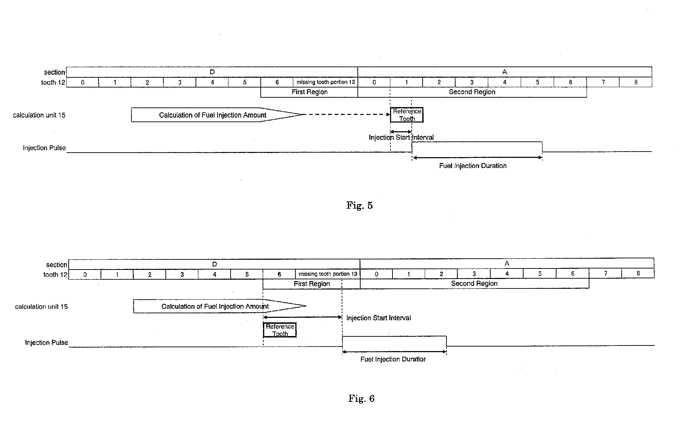

Next, Figs. 5 and 6 show a process for calculating the fuel injection amount in section A in a case where the pilot injection may be performed in a section D including the missing tooth portion 13. Likewise in this case, from a point at which the pickup 9b detects tooth number 6 in section D, which is the injection start possible tooth, to a point at which the pickup 9b detects tooth number 0 in section A, i.e., in the first region, the injection determining means initializes the elapse timer which is reset every time a tooth is detected in order to measure the elapsed time following detection of the tooth. Since no teeth exist in the missing tooth portion 13, however, the elapse timer starts to measure only when tooth number 6 is detected.

In a case where fuel injection is started after the pickup 9b detects tooth number 0 in section A following section D, i.e., in the second region (Fig. 5), calculation is performed using the procedures similar to the process for calculating the fuel injection amount in section B, and fuel injection is performed using similar procedures. On the other hand, when fuel injection is started before the pickup 9b detects tooth number 0 in section A, i.e., in the first region, as shown in Fig. 6, for example, when the injection start crank angle is calculated in the missing tooth portion of section D, teeth numbers 7 and 8 do not exist, and therefore the calculation unit 15 sets the tooth immediately preceding the missing tooth portion 13, i.e., tooth number 6, as the reference tooth, calculates the interval from the point at which the pickup 9b detects tooth number 6 to the start of fuel injection, and sets the reference tooth and the interval in the storage unit 16.

When the injection start reference tooth is tooth number 6 in section D, the injection determining means compares the value of the elapse timer with the injection start interval. When the value of the elapse timer is smaller than the injection start interval and does not therefore exceed the limit at which the injection determining means can output the pulse signal to the drive circuit 10 to open the solenoid valve 4, the injection determining means determines that fuel injection is possible, and accordingly outputs the pulse signal to the drive circuit 10 to open the solenoid valve 4 at the point where the value of the elapse timer reaches the injection start interval. As a result, the period for completing calculation of the fuel injection amount is extended to a point immediately preceding fuel injection.

Hence, by calculating the injection start reference tooth and the injection start interval from the injection start reference tooth on the basis of the injection start timing and using the elapse timer to measure the elapsed time following detection of a tooth every time the pickup 9b detects the tooth even before the calculation is completed, the period for completing calculation of the fuel injection amount can be extended to a point immediately preceding fuel injection, and as a result, fuel can be injected into each cylinder on the basis of the calculated fuel injection amount even when calculation of the fuel injection amount is completed after the reference tooth is detected.

Further, the elapse timer measures the elapsed time every time the pickup 9b detects a tooth after the pickup 9b detects the tooth which is the injection start reference tooth, and therefore in a case where the tooth including no possibility of injection is detected, an increase in the calculation load of the calculation unit 15 can be prevented.

Moreover, an injection possible region is divided into the first region in which the elapse timer measures the elapsed time following detection every time the pickup 9b detects a tooth and the second region in which the elapse timer measures the elapsed time following detection of the calculated injection start reference tooth, and the first region is set first. As a result, an increase in the calculation load by measuring the elapsed time every time a tooth is detected in the subsequent region having a leeway in the calculation time can be prevented.

In this embodiment, the diesel engine 1 is a V type eight cylinder diesel engine, but the present invention is not limited thereto, and any diesel engine having a plurality of cylinders, for example a line type engine or a horizontally opposed engine, may be used instead.

Further, in this embodiment, the first region and the second region are divided at the detection point of tooth number 0 in the section including TDC, but the present invention is not limited thereto. Instead, the first region and the second region may be divided at the detection point of a specific tooth, or the elapse timer may be initialized every time each of the teeth following detection of the injection start possible tooth are detected.

Furthermore, in this embodiment, a pilot injection was described as an example, but the present invention is not limited to a pilot injection, and any injection performed at a timing where fuel is injected first into a cylinder may be used.

Moreover, in this embodiment, the injection start possible tooth is provided so that the elapse timer is initialized at or after detection of the injection start possible tooth, but the present invention is not limited thereto, and the elapse timer may be initialized every time a tooth following the start of calculation of the fuel injection amount and the fuel injection timing is detected.

## Claims

1. A fuel injection control apparatus for a diesel engine having a plurality of cylinders, which calculates fuel injection amounts and fuel injection timings for respective cylinders on the basis of a crank angle, the fuel injection control apparatus comprising:
a pulser that rotates together with a crankshaft of the diesel engine and has a plurality of teeth provided on an outer peripheral edge thereof;
a pickup that detects the teeth; and
a control apparatus that calculates the fuel injection amounts and the fuel injection timings for the respective cylinders, and injects fuel into the respective cylinders from fuel injecting means provided in the respective cylinders on the basis of the calculated fuel injection amounts and fuel injection timings,
wherein the control apparatus calculates the fuel injection amounts and the fuel injection timings for injecting the fuel into the respective cylinders, calculates an injection start reference tooth and an interval following detection of the injection start reference tooth on the basis of the fuel injection timing, measures an elapsed time following detection of a tooth every time the pickup detects the tooth even before the calculation is completed, and injects the fuel on the basis of the result of the calculation at a timing where the elapsed time reaches the interval when the latest tooth detected by the pickup is identical to the injection start reference tooth at a point where the calculation is completed.

2. The fuel injection control apparatus according to claim 1, **characterized in that** the control apparatus measures the elapsed time every time the pickup detects a tooth which may be set as the injection start reference tooth in accordance with the calculation or each of the teeth following the tooth.

3. The fuel injection control apparatus according to claim 1 or 2, **characterized in that** the control apparatus includes:
a region in which the elapsed time following detection of a tooth is measured every time the pickup detects the tooth; and
a region in which the elapsed time is measured from a point at which the pickup detects the injection start reference tooth,
wherein the region in which the elapsed time following detection of a tooth is measured every time the pickup detects the tooth is set first.
